# EUROPEAN PATENT SPECIFICATION

(11) **EP 4 593 579 B1**
(45) Date of publication and mention of the grant of the patent: **07.10.2026**
(21) Application number: 23745651.2
(22) Date of filing: 10.07.2023
(51) Int. Cl.: A01D 34/66

(54) **WIDE-CUT MOWER WITH FOLDING CUTTERBAR**
BREITSCHNITTMÄHER MIT KLAPPBAREM MÄHBALKEN
TONDEUSE À COUPE LARGE AVEC BARRE DE COUPE PLIANTE

(30) Priority: 28.09.2022 US 202263377382 P
(43) Date of publication of application: 06.08.2025
(73) Proprietor: Agco Corporation, Duluth, Georgia 30096 (US)
(72) Inventor: JEFFERS, Lane Ethan, Hesston, Kansas 67062 (US); TREFFER, Douglas R, Hesston, Kansas 67062 (US); NAFZIGER, Brendon C, Hesston, Kansas 67062 (US)
(74) Representative: AGCO Intellectual Property Department
(86) International application number: PCT/IB2023/057067
(87) International publication number: WO 2024/069254

(56) References cited:
- RU-C2- 2 578 496
- US-A1- 2011 078 988
- US-A1- 2011 219 738
- US-A1- 2019 200 511
- US-A1- 2020 137 954
- US-B2- 10 638 664
- US-B2- 11 039 562
- US-B2- 6 776 432

## Description

### BACKGROUND

### Field of Invention

The present disclosure is generally related to agricultural mowing equipment and, more particularly to a wide-cut mower with a folding cutterbar.

### Description of Related Art

Rotary disc mowers having a cutting width greater than 3 to 4 meters are challenging to transport due to the overall width of the implement. Several manufacturers have designs to rotate the cutterbar 90 degrees to be transported lengthwise, but this requires a considerable amount of added structure and complexity and requires the operator to do numerous steps in sequence to switch between field and road modes. Other manufacturers equip their larger mowers with two cutterbars and run one ahead of the other with the rotary discs not intermeshing since they are not timed relative to each other. Although this geometry allows the two halves of the cutterbar to be folded into a narrow package for transport, the offset makes it more complicated to adjust the pitch of the cutterbars while maintaining an even cut height across the full width of the machine.

US 2019/200511 (CNH) shows an example disclosure of a harvester configured to be propelled by a vehicle, the harvester having a mower with a cutterbar made of a plurality of rotary cutters.

It would be desired to have a towed mower that reduces these problems by utilizing sections of cutterbar mounted in line with each other and a carrying frame with folding side wings.

### BRIEF SUMMARY

In one aspect, the invention is directed a pull-type harvester configured to be pulled by a towing vehicle, the pull-type harvester having a mower with a cutterbar made of a plurality of rotary cutters. Each rotary cutter has an elliptical knife carrier, and a pair of knives at opposites ends of the knife carrier, where a portion of each knife extends beyond the end of the knife carrier to expose a cutting surface that is used to sever a standing crop as the mower advances through a field. Each of the rotary cutters is ninety degrees out of phase with respect to the adjacent rotary cutters, inasmuch as the circular paths of travel of the knives on the elliptical knife carrier of adjacent cutters overlap one another. The mower includes a middle section and a right section pivotably attached to the middle section and a left section pivotably attached to the middle section such that the cutterbar is folded between an operational configuration in which the portions of the cutterbar in the right, middle and left sections are in-line with each other to form a straight, continuous cutterbar, and a transport configuration in which the portions of the cutterbar in the right and left sections are angled toward a vertical position with respect to the middle section. The mower has a drive train for powering the cutterbar. The drive train includes a primary gear box, a middle shaft section driven by the primary gear box, the middle shaft section leading to a middle gear case driving the rotary cutters in the middle section, a right shaft section driven by the primary gear box, the right shaft section leading to a right gear case driving the rotary cutters in the right section, and a left shaft section driven by the primary gear box, the left shaft section leading to a left gear case driving the rotary cutters in the left section. The drive train times the middle, right and left gear trains so the rotary cutter driven by the left gear case that is closest to the middle section and its adjacent rotary cutter driven by the middle gear case are synchronized such that the knife carriers remain out of phase, and the rotary cutter driven by the right gear case that is closest to the middle section and its adjacent rotary cutter driven by the middle gear case are synchronized such that the knife carriers remain out of phase.

These and other features and advantages of this invention are described in, or are apparent from, the following detailed description of various exemplary embodiments of the systems and methods according to this invention.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a perspective view of a pull-type implement in an operational condition;
FIG. 2 illustrates p perspective view of the pull-type implement in a transport condition;
FIG. 3 illustrates an top plan view of the pull-type implement of FIG. 1;
FIG. 4 illustrates a bottom view of the pull-type implement of FIG. 1;
FIG. 5 illustrates a perspective view of a portion of the mower of the pull-type implement of FIG. 1;
FIG. 6 illustrates an enlarged perspective view of a portion of the pull-type implement in an operational condition; and
FIG. 7 illustrates an enlarged perspective view of a portion of the pull-type implement in a transport condition.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention is defined by the claims.

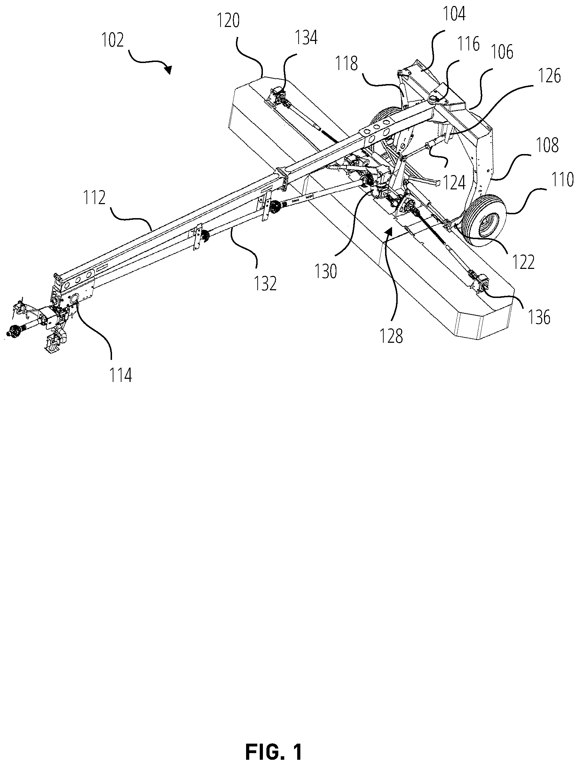

Referring now to the Figures, FIG. 1 shows a harvester 102 configured to be pulled by a tractor (not shown). While the invention disclosed herein is described in an embodiment of a pull-type harvester pulled by a tractor, one skilled in the art will understand that the harvester may also be used with a tractor in a front-mounted, push configuration. The harvester 102 includes a generally U-shaped frame 104 having an upper cross beam 106 and a pair of depending legs 108 at opposite ends of the cross beam 106. A pair of ground wheels 110 are connected to the lower ends of the respective legs 108. The frame 104 is adapted for towing movement through a long fore-and-aft tongue 112 having a swivel drawbar hitch mechanism 114 at its front end for a pivotable connection with a towing tractor (not shown) such as that disclosed in commonly owned U.S. Pat. No. 8,469,386 entitled Swivel Drawbar Hitch. As is understood in the art, the tractor may have a rearwardly extending drawbar and a rearwardly extending power take-off shaft that both couple to the swivel drawbar hitch mechanism 114, which may be utilized to connect the pull-type harvester 102 to the tractor for establishing a draft connection as the pull-type harvester 102 is towed over a field possibly having uneven surfaces. The cross beam 106 has a pivot connection 116 at its forward end with the tongue 112 and a first hydraulic cylinder 118 connecting the cross beam 106 to the tongue 112.

Supported by the frame 104 is a mower, broadly denoted by the numeral 120, designed to mow or cut a standing crop. The mower 120 is supported by a pair of lower support links 122, each of which pivotally connects at its rear end to one of the legs 108 and at its front end to the mower 120 via a pivoting connection. The mower 120 is also supported by a centrally disposed stabilizing link 124 that pivotally connects the upper rear portion of the mower 120 with a depending lug 126 on the cross beam 106 so that the mower 120 is supported in a three-point arrangement. However, the pull-type harvester 102 may be constructed in a number of different ways.

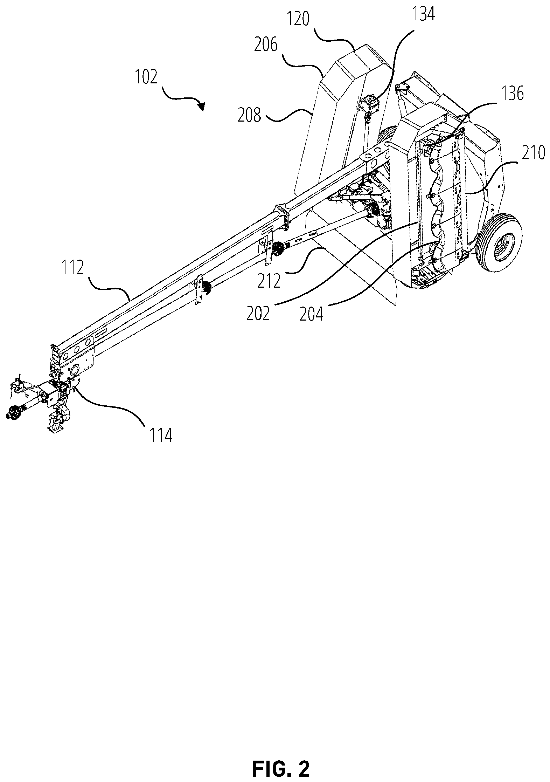

The mower 120 has a mower frame of its own, broadly denoted by the numeral 202 in FIG. 2. The mower frame 202 carries a cutterbar 204 that extends from one side of the mower 120 to the opposing side. The mower frame 202 supports a mower deck 206 having a generally box-like construction that partially shields the cutterbar 204. As can be seen in FIG. 2, the mower 120 has a right wing or section 208 and a left wing or section 210 that each pivot relative to a middle section 212 such that the mower frame 202, the cutterbar 204, and the deck 206 all can be folded between an operational configuration as shown in FIG. 1 and a transport configuration as shown in FIG. 2. In the operational position, the sections of the cutterbar 204 in the right, middle and left sections are in-line with each other so that the cutterbar 204 effectively functions as a single continuous cutterbar as will be described below.

The mower 120 has a drive train 128 for powering the cutterbar 204. In the illustrated embodiment, the drive train 128 includes a primary gear box 130 that connects to a rearwardly extending power take-off (PTO) shaft 132 carried by the tongue 112. In one embodiment, the primary gear box 130 is a swivel gearbox that may contain an upper right angle gearbox and a lower right angle gearbox as is known in the art, that share a common, upright drive shaft so that the output of upper right angle gearbox is received as input by the lower right angle gearbox enabling the gear box 130 to swivel as the tractor and pull-type harvester 102 navigate turns. However, other gearbox connections may be used to connect the drive train 128 of the mower 120 to the PTO shaft 132 such as constant-velocity driveline using sound engineering judgement.

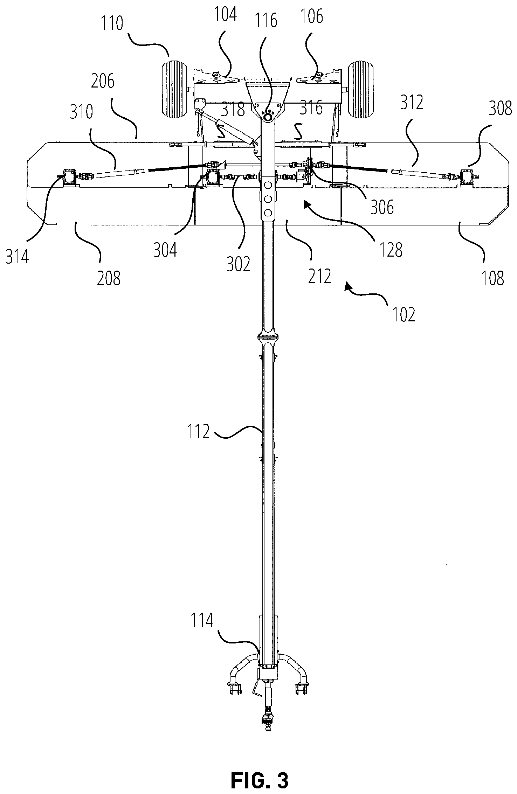

Turning also now to FIGS. 3-5, the drive train 128 has a first output shaft 502 that connects the primary gear box 130 to a middle shaft section 302 with a middle U-joint 504. The middle shaft section 302 connects to a 90-degree angle middle gearbox 304 that extends through a middle portion of the deck 206. A second output shaft 506 of the primary gear box 130 connects to a wing gearbox 306 with a double U-joint 508. The wing gearbox 308 drives a right shaft section 310 through a right U-joint 510 and a left shaft section 312 through a left U-joint 512. The right shaft section 310 has a right 90-degree angle wing gearbox 134 that extends through a right portion of the deck 206 and the left shaft section 312 has a left 90 degree angle wing gearbox 136 that extends through a left portion of the deck 206

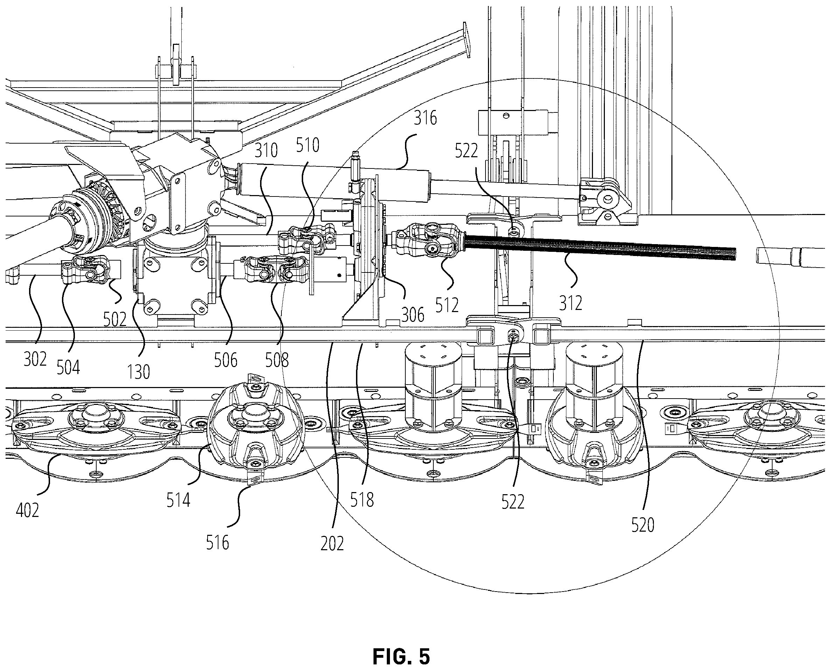

The cutterbar 204 is located adjacent the front of the deck 206 and is configured for severing crop from the ground as the pull-type harvester 102 moves across a field. The cutterbar 204 includes a series of rotary cutters 402 spaced across the path of travel of the mower 120 and each being rotatable about its own upright axis. The rotary cutters 402 may be similar to those disclosed in U.S. Pat. No. 6,158,201 to Pruitt et al. entitled "Rotary Mower Conditioner Having Improved Crop Flow" which is assigned to the assignee of the present invention. The rotary cutters 402 are rotatably supported on an elongated, flat cutterbar gear case 404 extending the length of the cutterbar 204 to present a substantially planar cutting zone, within which crop is severed from the ground. It will be appreciated that the rotary cutters 402 are similar in construction. For the sake of brevity, only one of the rotary cutters 402 will be described in detail herein with the understanding that the remaining cutters are similarly constructed. Turning now to FIG. 5, each of the rotary cutters 402 may include a generally elliptical, metal knife carrier 514, and a pair of knives 516 at opposites ends of the knife carrier 514. A portion of each knife 516 extends beyond the end of the knife carrier 514 to expose a cutting surface that is used to sever the standing crop as the rotary cutter 402 advances through the field. The knife carrier 514 has a center mounting portion used to mount the rotary cutter 402 on the cutterbar gear case 404 as is well known in the art using sound engineering judgment.

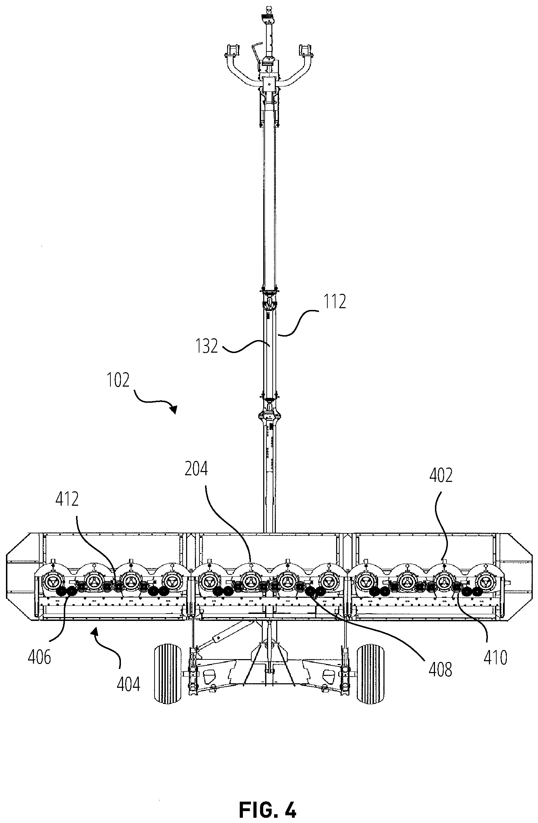

As perhaps best seen in FIG. 4, the cutterbar gear case 404 is made up of three sections, a right gear case 406 driven by the right wing gearbox 314, a middle gear case 408 driven by the middle gearbox 304, and a left gear case 410 driven by the left wing gearbox 308. In the illustrated embodiment, each of the right gear case 406, the middle gear case 408 and the left gear case 410 drives four rotary cutters 402, so that the mower 120 has a total of twelve rotary cutters 402. Each of the right gear case 406, the middle gear case 408 and the left gear case 410 contains a train comprising flat spur gears 412 that are operably engaged with one another and thus serve to distribute driving power to the rotary cutters 402 supported by the respective gear case 406, 408 and 410. However, one skilled in the art will understand that other forms of power distribution means may be used within the cutterbar gear case 404 (e.g., shafts and bevel gears, belts and pulleys, or chains and sprockets).

Each of the rotary cutters 402 is ninety degrees out of phase with respect to the adjacent cutters, inasmuch as the circular paths of travel of the knives 516 on the elliptical knife carrier 514 of adjacent cutters overlap one another and must be appropriately out of phase in order to avoid striking each other. It will also be appreciated that the spur gears 412 are arranged to rotate the rotary cutters 402 in opposite directions. In other words, in one embodiment, the second and third rotary cutters 402 as viewed from the left end of the cutterbar 204 in FIG. 4 rotate toward one another across the front of the cutterbar 204, as do the fourth and fifth rotary cutters 402, the sixth and seventh rotary cutters 402, and the eighth and ninth rotary cutters 402, etc. Due to the positive mechanical drive connection of the drive train 128 from the primary gear box 130 to the spur gears 412 in each section of the cutterbar gear case 404, the rotary cutters 402 remain properly out of phase with adjacent cutters. Thus, the rotary cutter 402 driven by the left gear case 410 that is closest to the middle section 212 and its adjacent rotary cutter 402 driven by the middle gear case 408 are synchronized such that the knife carriers 514 remain appropriately out of phase such that the circular paths of travel of the knives 516 of these adjacent cutters overlap one another but also avoid striking each other. Similarly, the rotary cutter 402 driven by the right gear case 406 that is closest to the middle section 212 and its adjacent rotary cutter 402 driven by the middle gear case 408 are synchronized such that the circular paths of travel of the knives 516 of these adjacent cutters overlap one another and remain appropriately out of phase so as to avoid striking each other. Thus, according to the invention, the rotary cutters 402 in the left, middle and right sections of the cutterbar 204 are driven with the drive train 128 to allow the timing of the overlapping rotary cutters 402 to be held. Accordingly, even though the right section 208 and the left section 210 may be folded with respect to the middle section 212, the cutterbar 204 functions as one continuous cutterbar.

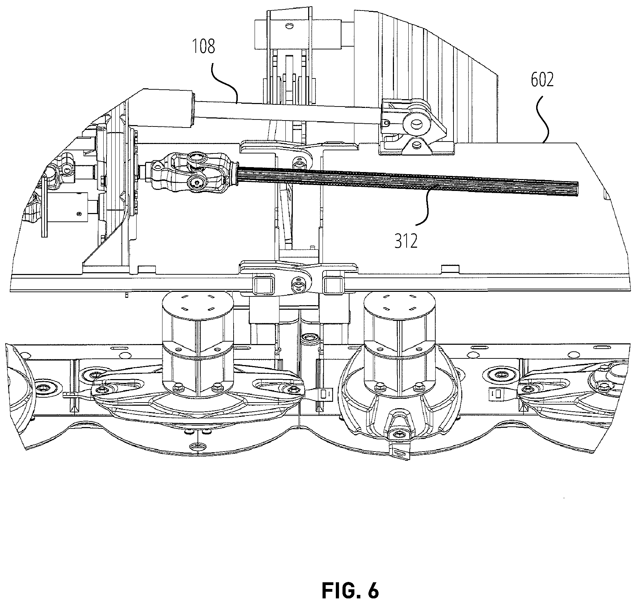

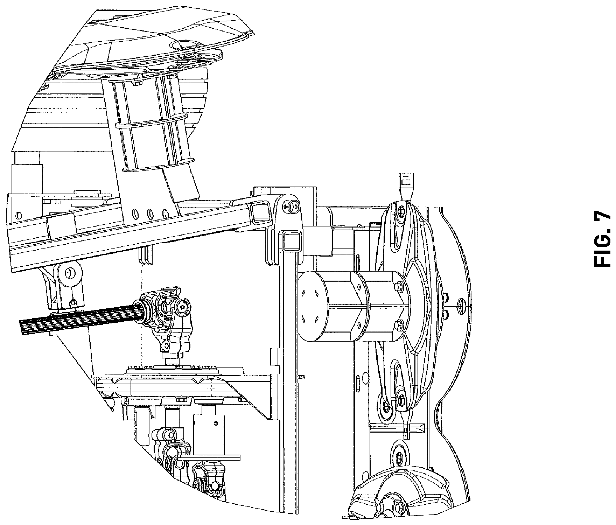

The mower frame 202 has a middle frame member 518 that pivotably receives a left frame member 520 at pivot links 522 near the forward and aft portions of the frame to define a pivot axis. A left lift actuator 316 connected to the left frame member 520 pivots the left section 210 relative the middle section 212 between an operational position as shown in FIG. 6 and a transport position as shown in FIG. 7. Similarly, the mower frame 202 has a right frame member that is povotably mounted on the middle frame member 518. A right lift actuator 318 connected to the right frame member pivots the right section 208 relative the middle section 212. For transport, right section 208 and the left section 210 pivot upwards such that they are angled with respect to the middle section 212 and are carried in a substantially vertical position. This arrangement provides better flexibility than a single section of equal cutting width while providing a fast, simple, and intuitive transition between road and field modes.

The pivot axis for the left frame member 520 with the middle frame member 518 is located on substantially the same horizontal plane as the wing gearbox 136 powering the left gear case 410 to minimize the length change of the telescoping driveshafts bridging between the cutterbar sections. During operation, a small amount of movement of the right and left sections 208, 210 relative to the middle section 212 is permissible within the limits of the overlap of the cutterbar knives 516 and driveline geometry. This arrangement provides better flexibility than a single section of equal cutting width while providing a fast, simple, and intuitive transition between road and field modes.

In the illustrated embodiment, the cutterbar 204 has four rotary cutters 402 in each section, which would give the mower 120 a cutting width of approximately 20 feet (6 meters). But one skilled in the art will understand that the mower 120 can have a modular design such that a greater or smaller number of rotary cutters 402 could be provided in the design of the cutterbar 204 so as to provide a narrower or wider cutting width.

The foregoing has broadly outlined some of the more pertinent aspects and features of the present invention. These should be construed to be merely illustrative of some of the more prominent features and applications of the invention. Other beneficial results can be obtained by applying the disclosed information in a different manner or by modifying the disclosed embodiments. Accordingly, other aspects and a more comprehensive understanding of the invention may be obtained by referring to the detailed description of the exemplary embodiments taken in conjunction with the accompanying drawings.

## Claims

1. A harvester (102) configured to be propelled by a vehicle, the harvester having a mower (120) with a cutterbar (204) made of a plurality of rotary cutters (402), each rotary cutter having an elliptical knife carrier (514), and a pair of knives (516) at opposites ends of the knife carrier (514), wherein a portion of each knife (516) extends beyond the end of the knife carrier (514) to expose a cutting surface that is used to sever a standing crop as the mower advances through a field, and each of the rotary cutters (402) being ninety degrees out of phase with respect to the adjacent rotary cutters (402), inasmuch as the circular paths of travel of the knives (516) on the elliptical knife carrier of adjacent rotary cutters (402) overlap one another, the mower (120) comprising:
a middle section (212) and a right section (208) pivotably attached to the middle section (212) and a left section (210) pivotably attached to the middle section (212) such that the cutterbar (204) is folded between an operational configuration in which the portions of the cutterbar (204) in the right, middle and left sections (208,212,210) are in-line with each other to form a straight, continuous cutterbar, and a transport configuration in which the portions of the cutterbar (204) in the right and left sections (208,210) are angled toward a vertical position with respect to the middle section (212);
a drive train (128) for powering the cutterbar (204), the drive train (128) comprising;
a primary gear box (130);
the drive train (128) **characterised in that** it further comprises
a middle shaft section (302) driven by the primary gear box (130), the middle shaft section (302) leading to a middle gear case (408) driving the rotary cutters (402) in the middle section (212);
a right shaft section (310) driven by the primary gear box (130), the right shaft section (310) leading to a right gear case (406) driving the rotary cutters (402) in the right section (208); and
a left shaft section (312) driven by the primary gear box (130), the left shaft section (312) leading to a left gear case (410) driving the rotary cutters (402) in the left section (210);
the drive train timing the middle, right and left gear trains so the rotary cutter driven by the left gear case (410) that is closest to the middle section (212) and its adjacent rotary cutter driven by the middle gear case (408) are synchronized such that the knife carriers remain out of phase, and the rotary cutter driven by the right gear case (406) that is closest to the middle section (212) and its adjacent rotary cutter driven by the middle gear case (408) are synchronized such that the knife carriers remain out of phase such that the cutterbar functions as one continuous cutterbar in the operational configuration.

2. The harvester of claim 1 wherein the rotary cutters in the left, middle and right sections of the cutterbar (204) are driven with the drive train (128) to allow the timing of the overlapping rotary cutters (402) such that each of the rotary cutters (402) are ninety degrees out of phase with respect to the adjacent rotary cutters (402).

3. The harvester of claim 1 wherein the harvester (102) is a pull-type harvester configured to be pulled by a towing vehicle.

4. The harvester of claim 1 wherein each of the right gear case, the middle gear case (408) and the left gear case (410) contains a train comprising spur gears (412) that are operably engaged with one another and distribute driving power to the rotary cutters (402) supported by the respective gear case.

5. The harvester of claim 4 wherein the spur gears (412) are arranged to rotate adjacent rotary cutters in opposite directions and the drive train (128) maintains the rotation of the rotary cutters (402) out of phase with adjacent cutters (402).

6. The harvester of claim 1 wherein the mower (120) comprises a mower frame (202) having a middle frame member (518) that pivotably receives a left frame member (520) at pivot links (522) positioned in forward and aft portions of the mower frame (202), wherein the pivot links (522) define a pivot axis, the mower (120) further comprising a left lift actuator (316) connected to the left frame member (520) that pivots the left section (210) relative to the middle section (212) between the operational configuration and the transport configuration, and the mower frame (202) has a right frame member that is pivotably mounted on the middle frame member (518) and a right lift actuator (318) connected to the right frame member that pivots the right section (208) relative the middle section (212).

7. The harvester of claim 6 wherein the pivot axis for the left frame member (520) with the middle frame member (518) is located on a horizontal plane with a wing gearbox (136) powering the left gear case (410).

## Patentansprüche

1. Erntemaschine (102), die zum Antrieb durch ein Fahrzeug ausgebildet ist, wobei die Erntemaschine einen Mäher (120) mit einem Mähbalken (204) aufweist, der aus mehreren rotierenden Messern (402) hergestellt ist, wobei jedes rotierende Messer einen elliptischen Messerträger (514) und ein Paar Messer (516) an gegenüberliegenden Enden des Messerträgers (514) aufweist, wobei sich ein Teil jedes Messers (516) über das Ende des Messerträgers (514) hinaus erstreckt, um eine Schneidfläche freizulegen, die zum Abtrennen eines stehenden Ernteguts verwendet wird, wenn sich der Mäher durch ein Feld bewegt, und wobei jedes der rotierenden Messer (402) bezüglich der benachbarten rotierenden Messer (402) um neunzig Grad phasenverschoben ist, da die kreisförmigen Bewegungsbahnen der Messer (516) auf dem elliptischen Messerträger benachbarter rotierender Messer (402) einander überlappen, wobei der Mäher (120) Folgendes umfasst:
einen mittleren Abschnitt (212) und einen rechten Abschnitt (208), der schwenkbar an dem mittleren Abschnitt (212) befestigt ist, und einen linken Abschnitt (210), der schwenkbar an dem mittleren Abschnitt (212) befestigt ist, so dass der Mähbalken (204) zwischen einer Betriebskonfiguration, in der die Teile des Mähbalkens (204) in dem rechten, mittleren und linken Abschnitt (208, 212, 210) in einer Linie miteinander liegen, um einen geraden, durchgehenden Mähbalken zu bilden, und einer Transportkonfiguration, in der die Teile des Mähbalkens (204) in dem rechten und dem linken Abschnitt (208, 210) in Richtung einer vertikalen Position bezüglich des mittleren Abschnitts (212) abgewinkelt sind, klappbar ist;
einen Antriebsstrang (128) zum Antreiben des Mähbalkens (204), wobei der Antriebsstrang (128) Folgendes umfasst:
ein Primärgetriebe (130);
wobei der Antriebsstrang (128) **dadurch gekennzeichnet ist, dass** er ferner Folgendes umfasst:
einen mittleren Wellenabschnitt (302), der durch das Primärgetriebe (130) angetrieben wird, wobei der mittlere Wellenabschnitt (302) zu einem mittleren Getriebegehäuse (408) führt, das die rotierenden Messer (402) im mittleren Abschnitt (212) antreibt;
einen rechten Wellenabschnitt (310), der durch das Primärgetriebe (130) angetrieben wird, wobei der rechte Wellenabschnitt (310) zu einem rechten Getriebegehäuse (406) führt, das die rotierenden Messer (402) im rechten Abschnitt (208) antreibt;
einen linken Wellenabschnitt (312), der durch das Primärgetriebe (130) angetrieben wird, wobei der linke Wellenabschnitt (312) zu einem linken Getriebegehäuse (410) führt, das die rotierenden Messer (402) im linken Abschnitt (210) antreibt;
wobei der Antriebsstrang den mittleren, rechten und linken Getriebezug zeitlich so steuert, dass das vom linken Getriebegehäuse (410) angetriebene rotierende Messer, das dem mittleren Abschnitt (212) am nächsten liegt, und sein vom mittleren Getriebegehäuse (408) angetriebenes benachbartes rotierendes Messer so synchronisiert werden, dass die Messerträger phasenverschoben bleiben, und das vom rechten Getriebegehäuse (406) angetriebene rotierende Messer, das dem mittleren Abschnitt (212) am nächsten liegt, und sein vom mittleren Getriebegehäuse (408) angetriebenes benachbartes rotierendes Messer so synchronisiert werden, dass die Messerträger phasenverschoben bleiben, so dass der Mähbalken in der Betriebskonfiguration als ein durchgehender Mähbalken funktioniert.

2. Erntemaschine nach Anspruch 1, wobei die rotierenden Messer in dem linken, mittleren und rechten Abschnitt des Mähbalkens (204) mit dem Antriebsstrang (128) dazu angetrieben werden, eine zeitliche Steuerung der überlappenden rotierenden Messer (402) zu ermöglichen, so dass jedes der rotierenden Messer (402) bezüglich der benachbarten rotierenden Messer (402) um neunzig Grad phasenverschoben ist.

3. Erntemaschine nach Anspruch 1, wobei die Erntemaschine (102) eine Anhängeerntemaschine ist, die dazu ausgebildet ist, von einem Zugfahrzeug gezogen zu werden.

4. Erntemaschine nach Anspruch 1, wobei das rechte Getriebegehäuse, das mittlere Getriebegehäuse (408) und das linke Getriebegehäuse (410) jeweils einen Getriebezug enthalten, der Stirnräder (412) umfasst, die miteinander in Wirkeingriff stehen und Antriebsleistung an die von dem jeweiligen Getriebegehäuse getragenen rotierenden Messer (402) verteilen.

5. Erntemaschine nach Anspruch 4, wobei die Stirnräder (412) dazu angeordnet sind, benachbarte rotierende Messer in entgegengesetzte Richtungen zu drehen, und der Antriebsstrang (128) die Drehung der rotierenden Messer (402) phasenverschoben zu benachbarten Messern (402) hält.

6. Erntemaschine nach Anspruch 1, wobei der Mäher (120) einen Mäherrahmen (202) mit einem mittleren Rahmenelement (518) umfasst, das ein linkes Rahmenelement (520) an Schwenkverbindungen (522), die in vorderen und hinteren Teilen des Mäherrahmens (202) positioniert sind, schwenkbar aufnimmt, wobei die Schwenkverbindungen (522) eine Schwenkachse definieren, wobei der Mäher (120) ferner einen linken Hubaktuator (316) umfasst, der mit dem linken Rahmenelement (520) verbunden ist und den linken Abschnitt (210) bezüglich des mittleren Abschnitts (212) zwischen der Betriebskonfiguration und der Transportkonfiguration schwenkt, und der Mäherrahmen (202) ein rechtes Rahmenelement aufweist, das schwenkbar an dem mittleren Rahmenelement (518) angebracht ist, und einen rechten Hubaktuator (318), der mit dem rechten Rahmenelement verbunden ist, aufweist, der den rechten Abschnitt (208) relativ zu dem mittleren Abschnitt (212) schwenkt.

7. Erntemaschine nach Anspruch 6, wobei die Schwenkachse für das linke Rahmenelement (520) mit dem mittleren Rahmenelement (518) in einer horizontalen Ebene mit einem Flügelgetriebe (136) angeordnet ist, das das linke Getriebegehäuse (410) antreibt.

## Revendications

1. Moissonneuse (102) conçue pour être propulsée par un véhicule, la moissonneuse comportant une faucheuse (120) avec une barre de coupe (204) faite d'une pluralité de dispositifs de coupe rotatifs (402), chaque dispositif de coupe rotatif ayant un porte-couteaux elliptique (514), et une paire de couteaux (516) à des extrémités opposées du porte-couteaux (514), une partie de chaque couteau (516) s'étendant au-delà de l'extrémité du porte-couteaux (514) pour exposer une surface de coupe qui est utilisée pour couper un produit de culture sur pied à mesure que la faucheuse avance dans un champ, et chacun des dispositifs de coupe rotatifs (402) étant déphasé de quatre-vingt-dix degrés par rapport aux dispositifs de coupe rotatifs adjacents (402), dans la mesure où les trajectoires circulaires des couteaux (516) sur le porte-couteaux elliptique des dispositifs de coupe rotatifs adjacents (402) se chevauchent, la faucheuse (120) comprenant :
une section centrale (212) et une section droite (208) attachée de manière pivotante à la section centrale (212) et une section gauche (210) attachée de manière pivotante à la section centrale (212) de sorte que la barre de coupe (204) soit pliée entre une configuration opérationnelle, dans laquelle les parties de la barre de coupe (204) dans les sections droite, centrale et gauche (208, 212, 210) sont alignées les unes avec les autres pour former une barre de coupe rectiligne continue, et une configuration de transport, dans laquelle les parties de la barre de coupe (204) dans les sections droite et gauche (208, 210) sont placées de manière angulaire vers une position verticale par rapport à la section centrale (212) ;
une chaîne cinématique (128) pour entraîner la barre de coupe (204), la chaîne cinématique (128) comprenant :
une boîte d'engrenage principale (130) ;
la chaîne cinématique (128) étant **caractérisée en ce qu'**elle comprend en outre
une section d'arbre centrale (302) entraînée par la boîte d'engrenage principale (130), la section d'arbre centrale (302) menant à un carter d'engrenage central (408) entraînant les dispositifs de coupe rotatifs (402) dans la section centrale (212) ;
une section d'arbre droite (310) entraînée par la boîte d'engrenage principale (130), la section d'arbre droite (310) menant à un carter d'engrenage droit (406) entraînant les dispositifs de coupe rotatifs (402) dans la section droite (208) ; et
une section d'arbre gauche (312) entraînée par la boîte d'engrenage principale (130), la section d'arbre gauche (312) menant à un carter d'engrenage gauche (410) entraînant les dispositifs de coupe rotatifs (402) dans la section gauche (210) ;
la chaîne cinématique assurant un réglage temporel des trains d'engrenages central, droit et gauche de sorte que le dispositif de coupe rotatif entraîné par le carter d'engrenage gauche (410) le plus proche de la section centrale (212) et son dispositif de coupe rotatif adjacent entraîné par le carter d'engrenage central (408) soient synchronisés de façon à ce que les porte-couteaux restent déphasés, et le dispositif de coupe rotatif entraîné par le carter d'engrenage droit (406) le plus proche de la section centrale (212) et son dispositif de coupe rotatif adjacent entraîné par le carter d'engrenage central (408) soient synchronisés de façon à ce que les porte-couteaux restent déphasés de sorte que la barre de coupe fonctionne comme une barre de coupe continue dans la configuration opérationnelle.

2. Moissonneuse selon la revendication 1, dans laquelle les dispositifs de coupe rotatifs dans les sections gauche, centrale et droite de la barre de coupe (204) sont entraînés avec la chaîne cinématique (128) pour permettre le réglage temporel des dispositifs de coupe rotatifs (402) en chevauchement de telle sorte que chacun des dispositifs de coupe rotatifs (402) soit déphasé de quatre-vingt-dix degrés par rapport aux dispositifs de coupe rotatifs adjacents (402).

3. Moissonneuse selon la revendication 1, la moissonneuse (102) étant une moissonneuse du type à traction conçue pour être tirée par un véhicule tracteur.

4. Moissonneuse selon la revendication 1, dans laquelle chacun du carter d'engrenage droit, du carter d'engrenage central (408) et du carter d'engrenage gauche (410) contient un train comprenant des roues d'engrenage droites cylindriques (412) qui sont en prise fonctionnelle les unes avec les autres et distribuent la force d'entraînement aux dispositifs de coupe rotatifs (402) supportés par le carter d'engrenage respectif.

5. Moissonneuse selon la revendication 4, dans laquelle les roues d'engrenage droites cylindriques (412) sont conçues pour faire tourner des dispositifs de coupe rotatifs adjacents dans des sens opposés et la chaîne cinématique (128) maintient la rotation des dispositifs de coupe rotatifs (402) déphasée par rapport aux dispositifs de coupe adjacents (402).

6. Moissonneuse selon la revendication 1, dans laquelle la faucheuse (120) comprend un châssis de faucheuse (202) ayant un élément de châssis central (518) qui reçoit à pivotement un élément de châssis gauche (520) au niveau de liaisons pivotantes (522) positionnées dans des parties avant et arrière du châssis de faucheuse (202), les liaisons pivotantes (522) définissant un axe de pivotement, la faucheuse (120) comprenant en outre un actionneur de levage gauche (316) relié à l'élément de châssis gauche (520) qui fait pivoter la section gauche (210) par rapport à la section centrale (212) entre la configuration opérationnelle et la configuration de transport, et le châssis de faucheuse (202) comprend un élément de châssis droit adapté à pivotement sur l'élément de châssis central (518) et un actionneur de levage droit (318) relié à l'élément de châssis droit qui fait pivoter la section droite (208) par rapport à la section centrale (212).

7. Moissonneuse selon la revendication 6, dans laquelle l'axe de pivotement pour l'élément de châssis gauche (520) avec l'élément de châssis central (518) est situé sur un plan horizontal avec une boîte d'engrenage d'aile (136) transmettant une force au carter d'engrenage gauche (410).
